# EUROPEAN PATENT APPLICATION

(11) **EP 2 019 548 A2**
(43) Date of publication of application: **28.01.2009**
(21) Application number: 08156345.4
(22) Date of filing: 16.05.2008
(51) Int. Cl.: H04N 7/01

(54) **Method for processing a video signal and video display apparatus using the same**

(30) Priority: 25.07.2007 KR 20070074729
(71) Applicant: Samsung Electronics Co., Ltd., Suwon-si, Gyeonggi-do 442-742 (KR)
(72) Inventor: Heo, Hye-hyun 105 Ever Ville, 1250-6,, Gyeonggi-do (KR)
(74) Representative: Davies, Robert Ean

(57) **Abstract**

A method for processing a video signal and a video display apparatus using the method are provided. The video display apparatus compares a current video field to a previous video field two fields earlier than the current video field, detects motion information, and de-interlaces the current video field using the detected motion information. Therefore, it is not necessary to wait until the next video field is input in order to detect motion information regarding the current video field, and thus it is possible to prevent video delay.

## Description

Apparatuses and methods consistent with the present invention relate to processing and displaying a video signal. More particularly, apparatuses and methods consistent with the present invention relate to converting an interlaced video signal into a progressive video signal and displaying the progressive video signal.

Video display apparatuses receive video signals provided from broadcast providers or from external devices such as game machines or personal computers (PCs), and display video corresponding to the received video signals. Examples of video display apparatuses include televisions (TVs) and computer monitors.

Such video display apparatuses may display video using a scanning method such as an interlaced scanning or a progressive scanning, also known as non-interlaced scanning. In the interlaced scanning, which is mainly used for general TVs, a single image frame is divided into two fields and then the two fields are alternately displayed , thereby displaying one picture. The two fields may be referred to as "top" and "bottom" fields, "upper" and "lower" fields, or "odd" and "even" fields, respectively.

In the progressive scanning, which is mainly used for computer monitors and digital TVs, the entire moving image is displayed frame by frame as if a film is projected onto a screen.

An interlaced video signal may be converted into a progressive video signal using a de-interlacing method. According to this method, a video display apparatus for processing a progressive video signal requires a de-interlacer, which converts an interlaced video signal into a progressive video signal, in order to process an interlaced video signal.

A motion adaptive de-interlacing method is one kind of de-interlacing method wherein motion information is detected using a reference field as a criterion and an interlaced video signal is converted into a progressive video signal using the detected motion information.

A conventional video display apparatus using the de-interlacing method compares a preceding video field to a subsequent video field based on a currently received video field and detects motion information, in order to display a single image frame. Here, motion information is information indicating whether there is a change between the preceding, current and subsequent video fields.

Additionally, the conventional video display apparatus generates a single image frame using the currently received video field and the previous video field based on the detected motion information.

Accordingly, in order to detect motion information on the currently received video field, after the next video field is received, the previous video field is then compared with the next video field. Next, the currently received video field is output using the detected motion information, and thus a single video field may be delayed.

Therefore, the video may be broken, which causes inconvenience to a user viewing the video.

Exemplary embodiments of the present invention aim to overcome the above disadvantages and other disadvantages not described above. Also, the present invention is not required to overcome the disadvantages described above, and an exemplary embodiment of the present invention may not overcome any of the problems described above.

Embodiments of the present invention provide a method for processing a video signal to remove a delay of de-interlaced video signal, and a video display apparatus using the same.

Embodiments of the present invention also provide a method for processing a video signal in which de-interlacing is performed so that the video signal is not delayed in order to prevent the video from being broken, and a video display apparatus using the same.

Embodiments of the present invention further provide a method for processing a video signal to provide a video game without video delay when the video game is rapidly changing, and a video display apparatus using the same.

According to the present invention there is provided an apparatus and method as set forth in the appended claims. Other features of the invention will be apparent from the dependent claims, and the description which follows.

According to an aspect of the present invention, there is provided a method for processing a video signal comprising comparing a current video field to a previous video field two fields earlier than the current video field, and detecting motion information; and de-interlacing the current video field using the detected motion information.

If the current video field is an odd video field, the previous video field may be an odd video field, and if the current video field is an even video field, the previous video field may be an even video field.

If it is determined using the detected motion information that motion is detected, the de-interlacing may comprise repeating the current video field to generate a single image frame.

If it is determined using the detected motion information that motion is not detected, the de-interlacing may comprise generating a single image frame using the current video field and a previous video field.

According to another aspect of the present invention, there is provided a video display apparatus comprising a motion detector which compares a current video field to a previous video field two fields earlier than the current video field, and detects motion information; and a processor which de-interlaces the current video field using the detected motion information.

If the current video field is an odd video field, the previous video field may be an odd video field, and if the current video field is an even video field, the previous video field may be an even video field.

If it is determined using the detected motion information that motion is detected, the processor may repeat the current video field to generate a single image frame.

If it is determined using the detected motion information that motion is not detected, the processor may generate a single image frame using the current video field and a previous video field.

According to another aspect of the present invention, there is provided a method for processing a video signal comprising detecting motion information regarding a current video field; repeating the current video field to generate a single image frame if it is determined using the detected motion information that motion is detected; and generating a single image frame using the current video field and a previous video field if it is determined using the detected motion information that motion is not detected.

The detecting may comprise comparing the current video field to a previous video field two fields earlier than the current video field, and detecting the motion information.

If the current video field is an odd video field, the previous video field may be an odd video field, and if the current video field is an even video field, the previous video field may be an even video field.

According to another aspect of the present invention, there is provided a video display apparatus comprising a motion detector which detects motion information regarding a current video field; a temporal processor which repeats the current video field to generate a single image frame if it is determined using the detected motion information that motion is detected; and a spatial processor which generates a single image frame using the current video field and a previous video field if it is determined using the detected motion information that motion is not detected.

The motion detector may compare the current video field to a previous video field two fields earlier than the current video field, and detect the motion information.

If the current video field is an odd video field, the previous video field may be an odd video field, and if the current video field is an even video field, the previous video field may be an even video field.

For a better understanding of the invention, and to show how embodiments of the same may be carried into effect, reference will now be made, by way of example, to the accompanying diagrammatic drawings in which:
FIG. 1 is a block diagram showing a video display apparatus according to an exemplary embodiment of the present invention;
FIG. 2 is a diagram explaining in detail a method for processing a video signal in the video display apparatus according to an exemplary embodiment of the present invention; and
FIG. 3 is a flowchart explaining a method for processing a video signal in the video display apparatus according to an exemplary embodiment of the present invention.

Certain exemplary embodiments of the present invention will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the invention. Thus, it is apparent that the exemplary embodiments of the present invention can be carried out without those specifically defined matters. Also, well-known functions or constructions are not described in detail since they would obscure the invention with unnecessary detail.

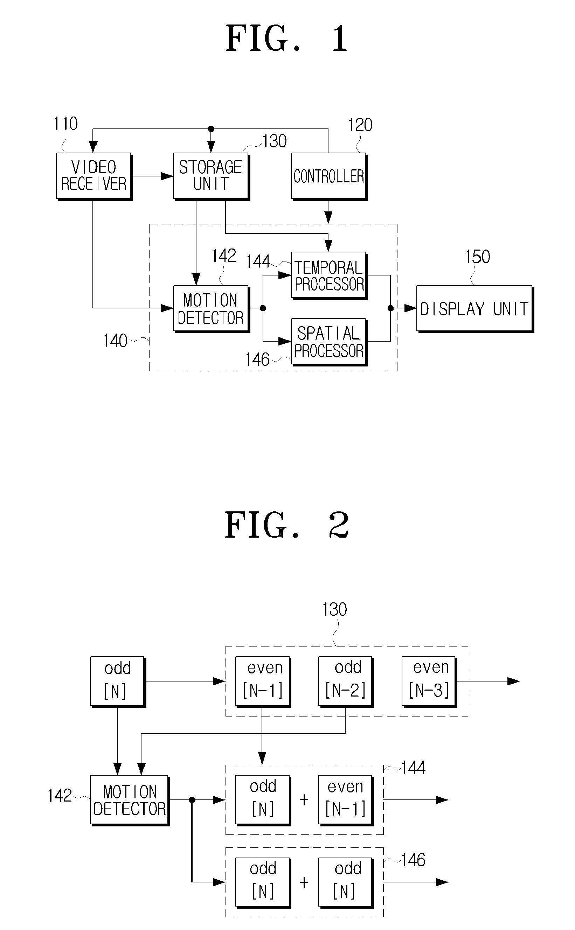

FIG. 1 is a block diagram showing a video display apparatus according to an exemplary embodiment of the present invention.

The video display apparatus of FIG. 1 compares a currently received video field (hereinafter, referred to as "current field") to a video field two fields earlier than the current field, and detects motion information in the current field. Accordingly, in order to detect the motion information in the current video field, there is no need to wait until the next video field is input, so no video delay occurs.

As shown in FIG. 1, the video display apparatus comprises a video receiver 110, a controller 120, a storage unit 130, a de-interlacer 140 and a display unit 150.

The video receiver 110 receives a video signal from an external device. In this situation, the received video signal is an interlaced video signal which is a video field (hereinafter, referred to as the "field").

The controller 120 stores the field received by the video receiver 110 in the storage unit 130. The storage unit 130 is a buffer which temporarily stores predetermined fields input through the video receiver 110 in sequence.

The de-interlacer 140 generates a single image frame using two fields based on motion information. The de-interlacer 140 comprises a motion detector 142, a temporal processor 144 and a spatial processor 146.

The motion detector 142 compares the current field received by the video receiver 110 to a field two fields earlier than the current field among the fields stored in the storage unit 130, and detects motion information.

The motion detector 142 transmits the detected motion information and the current field to the temporal processor 144 and the spatial processor 146.

The temporal processor 144 temporally de-interlaces the current field based on the motion information detected by the motion detector 142. Specifically, the temporal processor 144 generates a single image frame using the current field and a previous field stored in the storage unit 130.

The spatial processor 146 spatially interlaces the current field based on the motion information detected by the motion detector 142. Specifically, the spatial processor 146 generates a single image frame using the current field.

The display unit 150 displays the image frames generated by the temporal processor 144 and the spatial processor 146.

FIG. 2 is a diagram explaining in detail a method for processing a video signal in the video display apparatus according to an exemplary embodiment of the present invention.

In FIG. 2, three fields are stored in the storage unit 130 in the order in which they are input. For example, if a single image frame is divided into odd and even fields, an even field [N-3], an odd field [N-2] and an even field [N-1] may be sequentially stored in the storage unit 130.

The current field is an odd field [N] in FIG. 2. The motion detector 142 compares the odd field [N], namely, the current field, to the odd field [N-2], namely, the field two fields earlier than the current field among the fields stored in the storage unit 130, and detects motion information in the current field.

If the current field is an odd field, the odd fields among the stored fields may be used for comparison to detect motion information, and if the current field is an even field, the even fields among the stored fields may be used for comparison to detect motion information.

In this situation, the controller 120 outputs the odd field [N-2] stored in the storage unit 130 to the motion detector 142.

The odd field [N-2] is the field two fields earlier than the current field, that is, the field [N-2] preceding the field [N-1], which immediately precedes the current field [N]. Additionally, the odd field [N-2] may be a field in a previous line of the odd field [N], namely, the current field.

If it is determined that there is no change between the current field and the field two fields earlier than the current field based on the motion information, the temporal processor 144 may generate a single image frame using the current field and a previous field, and may output the generated frame. For example, referring to FIG. 2, a single image frame may be created using the odd field [N] and the even field [N-1].

The controller 120 outputs the even field [N-1] stored in the storage unit 130 to the temporal processor 144.

Alternatively, if it is determined that there is a change between the current field and the field two fields earlier than the current field based on the motion information, the spatial processor 146 may repeat the current field to generate a single image frame and output the generated frame. For example, a single image frame may be created using two odd fields [N] of FIG. 2.

If the next field is input, the controller 120 may delete the even field [N-3] stored in the storage unit 130, and store the odd field [N] in the storage unit 130.

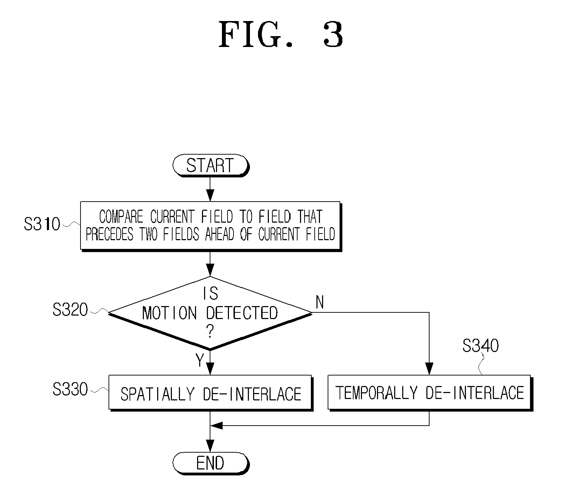

FIG. 3 is a flowchart explaining a method for processing a video signal in the video display apparatus according to an exemplary embodiment of the present invention.

In FIG. 3, the motion detector 142 compares the current field to the field two fields earlier than the current field, and detects motion information (S310).

The temporal and spatial processors 144 and 146 determine whether motion is detected based on the motion information detected by the motion detector 142 (S320). Specifically, if it is determined that there is a change between the current field and the field two fields earlier than the current field, the temporal and spatial processors 144 and 146 may determine that motion is detected.

If it is determined that motion is detected, the spatial processor 146 may spatially de-interlace the current field (S330). Spatial de-interlacing has been described above with reference to FIG. 2, so detailed description is omitted here.

If it is determined that motion is not detected, the temporal processor 144 may temporally de-interlace the current field (S340). Temporal de-interlacing has been also described above with reference to FIG. 2, so detailed description is omitted here.

As described above, according to an exemplary embodiment of the present invention, there is no need to wait until a next field is input, in order to detect motion information on the current field, so video may not be delayed. For example, if a video game is rapidly changing, it is possible to provide the video game without video delay.

Therefore, the motion adaptive de-interlacing can eliminate or improve the problem of video delay.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for processing a video signal, the method comprising:
detecting (S310) motion information regarding a current video field; and
de-interlacing the current video field using the detected motion information.

2. The method as claimed in claim 1, wherein the detecting comprises comparing (S310) the current video field to a previous video field two fields earlier than the current video field, and detecting (S320) the motion information.

3. The method as claimed in claim 1 or 2, wherein, if the current video field is an odd video field, the previous video field is an odd video field, and if the current video field is an even video field, the previous video field is an even video field.

4. The method as claimed in any preceding claim, wherein the de-interlacing comprises repeating the current video field to generate a single image frame if it is determined using the detected motion information that motion is detected.

5. The method as claimed in any preceding claim, wherein the de-interlacing comprises generating a single image frame using the current video field and a previous video field if it is determined using the detected motion information that motion is not detected.

6. The method as claimed in any preceding claim, wherein the de-interlacing comprises repeating the current video field to generate a single image frame if it is determined using the detected motion information that motion is detected, and generating a single image frame using the current video field and a previous video field if it is determined using the detected motion information that motion is not detected.

7. A video display apparatus comprising:
a motion detector (142) operable to detect motion information regarding a current video field; and
a processor (144,146) operable to de-interlace the current video field using the detected motion information.

8. The video display apparatus as claimed in claim 7, wherein the motion detector is operable to compare the current video field to a previous video field two fields earlier than the current video field, and to detect the motion information.

9. The video display apparatus as claimed in claim 7 or 8, wherein if the current video field is an odd video field, the previous video field is an odd video field, and if the current video field is an even video field, the previous video field is an even video field.

10. The video display apparatus as claimed in any of claims 7-9, wherein the processor is operable to repeat the current video field to generate a single image frame if it is determined using the detected motion information that motion is detected.

11. The video display apparatus as claimed in any of claims 7-10, wherein the processor is operable to generate a single image frame using the current video field and a previous video field if it is determined using the detected motion information that motion is not detected.

12. The video display apparatus as claimed in any of claims 7-11, wherein the processor comprises a temporal processor (144) operable to repeat the current video field to generate a single image frame if it is determined using the detected motion information that motion is detected, and a spatial processor (146) operable to generate a single image frame using the current video field and a previous video field if it is determined using the detected motion information that motion is not detected.
